# EUROPEAN PATENT APPLICATION

(11) **EP 4 776 158 A1**
(43) Date of publication of application: **15.07.2026**
(21) Application number: 24861901.7
(22) Date of filing: 30.08.2024
(51) Int. Cl.: G06F 16/732

(54) **SEARCH PROCESSING METHOD AND APPARATUS, AND COMPUTER READABLE STORAGE MEDIUM**

(30) Priority: 05.09.2023 CN 202311140509
(71) Applicant: Beijing Zitiao Network Technology Co., Ltd., Beijing 100190 (CN)
(72) Inventor: LIU, Siyu, Beijing 100028 (CN)
(74) Representative: Marks & Clerk LLP
(86) International application number: PCT/CN2024/115821
(87) International publication number: WO 2025/051057

(57) **Abstract**

The present invention relates to the technical field of artificial intelligence, and relates to a search processing method and apparatus, and a computer readable storage medium. The search processing method in the present invention comprises: receiving a question input by a user; and on the basis of the question, displaying an answer of the question and a plurality of answer videos related to the question in a search result page, wherein the answer is a sentence which is generated by machine understanding of the plurality of answer videos and described in natural language, and comprises description information of each answer video among the plurality of answer videos generated by machine understanding of the answer video.

## Description

### CROSS-REFERENCE TO RELATED APPLICATIONS

The present application is based on and claims priority to CN Application No. 202311140509.1, filed on September 5, 2023, which is incorporated herein by reference in its entirety.

### TECHNICAL FIELD

The present disclosure relates to the field of artificial intelligence technologies, and in particular, to a search processing method and apparatus, and a computer-readable storage medium.

### BACKGROUND

With the development of Internet technologies, users obtain various kinds of information from Internet platforms, and the access to information has become increasingly convenient.

Search is a commonly used way to obtain information. Generally, users input keywords, statements, etc., to search for some related content for display.

### SUMMARY

The summary is provided to give a brief overview of concepts, which will be described in detail in the following detailed description of embodiments. The summary is neither intended to identify key or necessary features of the claimed technical solutions nor intended to be used to limit the scope of the claimed technical solutions.

According to some embodiments of the present disclosure, a search processing method is provided. The method includes: receiving a question input by a user; and displaying, on a search result page, an answer to the question, and a plurality of answer videos related to the question based on the question, where the answer is a statement that is generated by machine understanding of the plurality of answer videos and that is described in natural language, and the answer includes description information for each answer video that is generated by machine understanding of each of the plurality of answer videos.

In some embodiments, displaying, on the search result page, the answer to the question and the plurality of answer videos related to the question includes: displaying a reference identifier for each answer video at a position corresponding to the description information for each answer video in the answer; and displaying the reference identifier for each answer video on each answer video.

In some embodiments, the search processing method further includes: receiving a trigger operation of the user on a reference identifier displayed in the answer; and playing the answer video corresponding to the reference identifier.

In some embodiments, the search processing method further includes: displaying one or more candidate questions on the search result page based on the question and the plurality of answer videos.

In some embodiments, the search processing method further includes: receiving a selection operation of the user on any of the one or more candidate questions, and jumping to a conversation page; and displaying an answer to the selected candidate question on the conversation page.

In some embodiments, the search processing method further includes: displaying an entry control for continuing to ask questions on the search result page; and receiving a trigger operation of the user on the entry control, and jumping to the conversation page.

In some embodiments, the search processing method further includes: displaying at least one of the answer or a candidate question on the conversation page.

In some embodiments, displaying, on the search result page, the answer to the question and the plurality of answer videos related to the question includes: playing some or all of the plurality of answer videos automatically in response to a display range of the answer being within a first preset range.

In some embodiments, displaying, on the search result page, the answer to the question and the plurality of answer videos related to the question further includes: displaying preview information of the plurality of answer videos in response to a display position of the answer being outside the first preset range.

In some embodiments, playing some or all of the plurality of answer videos automatically in response to the display range of the answer being within the first preset range includes: playing some or all of the plurality of answer videos automatically in response to a display position at the bottom of a last row of the answer being located above a first reference line.

In some embodiments, playing some or all of the plurality of answer videos automatically in response to the display range of the answer being within the first preset range further includes: playing some or all of the plurality of answer videos in response to the display position at the bottom of the last row of the answer being located below the first reference line, and a display position at the top of a first row of the answer being located above a second reference line, where the second reference line is located above the first reference line.

In some embodiments, the search result page includes a fixed display area, and a search card area that supports swiping display, and displaying, on the search result page, the answer to the question and the plurality of answer videos related to the question further includes: displaying the answer and the plurality of answer videos in the search card area.

In some embodiments, the search card area includes a first area and a second area, and displaying the answer and the plurality of answer videos in the search card area includes: displaying the answer in the first area, where a display range of the first area is adaptively adjusted based on a length of the answer within a second preset range; and displaying the plurality of answer videos in the second area, where the plurality of answer videos support swiping display in the second area.

In some embodiments, displaying the answer in the first area includes: hiding content of the answer that exceeds the second preset range, and displaying an expand control, in response to a length of the answer exceeding the second preset range; and receiving a trigger operation of the user on the expand control, and displaying the answer fully.

In some embodiments, displaying the answer in the first area further includes: displaying a hide control in response to the length of the answer exceeding the second preset range and the answer being fully displayed; and receiving a trigger operation of the user on the hide control, and hiding content of the answer that exceeds the second preset range.

In some embodiments, the search processing method further includes: receiving a first operation of the user on any of the plurality of answer videos; and switching an answer video corresponding to the first operation from a first display state to a second display state.

In some embodiments, the search processing method further includes: receiving a second operation of the user on a control on the search result page; and switching the control corresponding to the second operation from a third display state to a fourth display state.

In some embodiments, the search processing method further includes: displaying a plurality of recommended videos related to the question on the search result page, where a search strategy for the plurality of recommended videos is different from a search strategy for the plurality of answer videos.

In some embodiments, the search processing method further includes: receiving a trigger operation of the user on any recommended video of the plurality of recommended videos; and playing the any recommended video.

In some embodiments, receiving a trigger operation of the user on any answer video of the plurality of answer videos; and playing the any answer video.

In some embodiments, displaying, on the search result page, the answer to the question and the plurality of answer videos related to the question based on the question includes: performing machine understanding on a plurality of videos in a first database based on the question by using a first neural network model, to obtain the plurality of answer videos related to the question from the plurality of videos, and generate the description information for each answer video; and generating the answer based on the description information for each answer video.

In some embodiments, the search processing method further includes: receiving information input by the user; performing machine understanding on a plurality of pieces of multimedia content in a second database based on the input information by using a second neural network, to obtain a plurality of pieces of target multimedia content related to the input information from the plurality of pieces of multimedia content, in response to the input information being not a question; and displaying the plurality of pieces of target multimedia content on the search result page.

According to some other embodiments of the present disclosure, a search processing apparatus is provided. The apparatus includes: a receiving module configured to receive a question input by a user; and a display module configured to display, on a search result page, an answer to the question and a plurality of answer videos related to the question based on the question, where the answer is a statement that is generated by machine understanding of the plurality of answer videos and that is described in natural language, and the answer includes description information for each answer video that is generated by machine understanding of each of the plurality of answer videos.

According to still some other embodiments of the present disclosure, a search processing apparatus is provided. The apparatus includes: a processor; and a memory coupled to the processor and configured to store instructions that, when executed by the processor, cause the processor to perform the search processing method according to any one of the embodiments of the present disclosure.

According to yet some other embodiments of the present disclosure, a computer-readable storage medium is provided. The computer-readable storage medium has a computer program stored thereon, where the program, when executed by a processor, causes the processor to implement the search processing method according to any one of the embodiments of the present disclosure.

According to still some other embodiments of the present disclosure, a computer program product is provided. The computer program product includes instructions that, when executed by a processor, cause the processor to implement the search processing method according to any one of the embodiments of the present disclosure.

According to yet some other embodiments of the present disclosure, a computer program is provided. The computer program includes instructions that, when executed by a processor, cause the processor to implement the search processing method according to any one of the embodiments of the present disclosure.

From the following detailed description of exemplary embodiments of the present disclosure with reference to the accompanying drawings, other features and advantages of the present disclosure will become clear.

### BRIEF DESCRIPTION OF THE DRAWINGS

Preferred embodiments of the present disclosure are described below with reference to the accompanying drawings. The accompanying drawings illustrated herein are used to provide a further understanding of the present disclosure, and together with the following detailed description, are incorporated in and form a part of the specification, to explain the present disclosure. It should be understood that the accompanying drawings in the following description relate to only some embodiments of the present disclosure, and do not constitute a limitation on the present disclosure. In the accompanying drawings:
FIG. 1 is a schematic flowchart of a search processing method according to some embodiments of the present disclosure;
FIG. 2 is a schematic diagram of a search result page according to some embodiments of the present disclosure;
FIG. 3 is a schematic diagram of a search result page according to some other embodiments of the present disclosure;
FIG. 4 is a schematic diagram of a search result page according to still some other embodiments of the present disclosure;
FIG. 5 is a schematic diagram of a search result page according to yet some other embodiments of the present disclosure;
FIG. 6 is a schematic diagram of a search result page according to still some other embodiments of the present disclosure;
FIG. 7 is a schematic structural diagram of a search processing apparatus according to some embodiments of the present disclosure;
FIG. 8 is a schematic structural diagram of a search processing apparatus according to still some other embodiments of the present disclosure; and
FIG. 9 is a schematic structural diagram of a search processing apparatus according to yet some other embodiments of the present disclosure;

It should be understood that, for ease of description, the sizes of various parts shown in the accompanying drawings are not necessarily drawn to actual scale. The same or similar reference numerals in the accompanying drawings are used to denote the same or similar components. Therefore, once an item is defined in one of the drawings, it may not be further discussed in the subsequent accompanying drawings.

### DETAILED DESCRIPTION

The technical solutions in the embodiments of the present disclosure are clearly and completely described below with reference to the accompanying drawings of the embodiments of the present disclosure. However, clearly, the embodiments described are merely some embodiments of the present disclosure rather than all the embodiments. The following description of the embodiments is actually merely illustrative, and in no way serves as any limitation to the present disclosure and application or use thereof. It should be understood that the present disclosure may be implemented in various forms and should not be construed as being limited to the embodiments set forth herein.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect. Unless specifically stated otherwise, the relative arrangement of components and steps, numerical expressions, and numerical values set forth in these embodiments should be construed as merely examples, and do not limit the scope of the present disclosure.

The term "include" and the variations thereof used in the present disclosure are open-ended terms that include at least subsequent elements/features but do not exclude other elements/features, that is, "including but not limited to". Furthermore, the term "comprise" and the variations thereof used in the present disclosure are open-ended terms that comprise at least subsequent elements/features but do not exclude other elements/features, that is, "comprising but not limited to". Therefore, "include" is synonymous with "comprise". The term "based on" means "at least partially based on".

The terms "one embodiment", "some embodiments", or "an embodiment" described throughout the specification means that the specific features, structures, or characteristics described in connection with the embodiments are included in at least one embodiment of the present disclosure. For example, the term "one embodiment" means "at least one embodiment". The term "another embodiment" means "at least one another embodiment". The term "some embodiments" means "at least some embodiments". Moreover, the phrase "in one embodiment", "in some embodiments", or "in an embodiment" appearing in various places throughout the specification does not necessarily all refer to the same embodiment, but may also refer to the same embodiment.

It should be noted that concepts such as "first" and "second" mentioned in the present disclosure are only used to distinguish different apparatuses, modules, or units, and are not used to limit the sequence of functions performed by these apparatuses, modules, or units or interdependence. Unless otherwise specified, concepts such as "first" and "second" are not intended to imply that the objects described in this way must be in a given order in terms of time, space, or ranking, or in any other given order.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

The embodiments of the present disclosure are described in detail below with reference to the accompanying drawings. However, the present disclosure is not limited to these specific embodiments. The following specific embodiments may be combined with each other, and the same or similar concepts or processes may not be repeated in some embodiments. Furthermore, in one or more embodiments, specific features, structures, or characteristics may be combined in any suitable manner that would be clear to those of ordinary skill in the art from the present disclosure.

In the related art, users conduct search by inputting keywords, statements, etc., for displaying some related content. Especially for video search, only some related videos and video titles are displayed to the users by matching the keywords input by the users with videos. The search effect is not satisfactory, resulting in poor user experience.

One technical problem to be solved by the present disclosure is as follows: how to improve the accuracy and effectiveness of search and enhance the search effect.

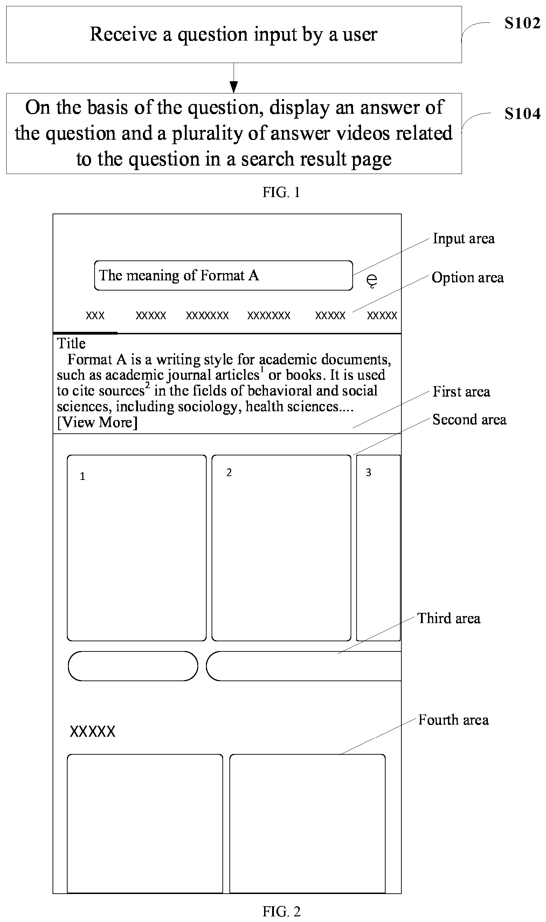

The present disclosure proposes a search processing method, which is applicable to video search scenarios and human-machine conversation scenarios. The method can improve the accuracy and effectiveness of search, enhance the search effect and the display effect, and enhance the user experience. Description is provided below with reference to FIGs. 1 to 5.

FIG. 1 is a flowchart of a search processing method according to some embodiments of the present disclosure. As shown in FIG. 1, the method in this embodiment includes Steps S102 to S104.

At step S102, a question input by a user is received.

It is possible to receive text input by the user through a search box, or receive a speech or an image input by the user, and information input by the user may be received in a variety of forms. It is possible to receive the information input by the user directly from a search page, or receive the information input by the user from other pages and then jump to the search page for display. For example, it is possible to receive the information input by the user through a conversation page for human-machine interaction and then jump to the search page. The examples provided are not exhaustive.

In some embodiments, it is determined whether the information input by the user is a question. For example, semantic recognition and syntactic recognition may be performed on the text input by the user to determine whether the text input by the user is a question; or speech recognition may be performed on the speech input by the user to determine whether the speech input by the user is a question; or image recognition may be performed on the image input by the user to determine whether the image input by the user is a question. The examples provided are not exhaustive. If the information input by the user is a question, a question-and-answer search function is automatically triggered.

At step S104, an answer to the question and a plurality of answer videos related to the question are displayed on the search result page based on the question.

In some embodiments, the answer is a statement that is generated by machine understanding of the plurality of answer videos and that is described in natural language. The answer includes description information for each answer video that is generated by machine understanding of each of the plurality of answer videos.

In some embodiments, a first neural network model (or a first machine learning model) is used to perform machine understanding on a plurality of videos in a first database based on the question, to obtain the plurality of answer videos related to the question from the plurality of videos, and generate the description information for each answer video; and generate the answer based on the description information for each answer video.

The first database may be configured to store the plurality of videos for answering questions posed by the user. That is, the plurality of videos may be used for video question and answer. The first database may also store other resources such as text, images, audios that are used to answer questions posed by the user. Each video is input into the first neural network for machine understanding to obtain description information for each video. For example, the first neural network may be used to perform multimodal recognition on subtitles, a title, images and audio of each video to understand content of each video, generate description information for each video, and select answer videos related to the question from the plurality of videos. For example, the videos may be ranked based on one or more of metrics such as a relevance of each video to the question, a search popularity (number or frequency), a number of user comments, a number of user likes, or a number of user views, and videos ranking within a preset position may be selected as the answer videos related to the question. For example, the videos may be ranked, and the top three or top four videos may be selected as the answer videos.

After selecting the plurality of answer videos, the answer described in natural language may be generated based on the description information for each answer video or based on the description information for each answer video in combination with knowledge information in a preset knowledge base. The answer may be a paragraph that includes one or more statements, which is in line with reading habits of the user and meets preset conditions in terms of coherence and fluency, thereby enhancing the user experience.

The answer may be presented in the form of text or played in the form of speech. For example, the answer is displayed in the form of text, and a speech playback control is provided at a position corresponding to the text to receive a trigger operation of the user on the speech playback control, and play speech corresponding to the text.

In some embodiments, a reference identifier for each answer video is displayed at a position corresponding to the description information for each answer video in the answer; and the reference identifier for each answer video is displayed on each answer video.

The specific form of the reference identifier may be set according to the actual situation. For example, the reference identifier may take various forms such as a number, a keyword of the video, or a title of the video. The reference identifier may be provided after the description information for the answer video corresponding to the reference identifier, to facilitate indicating that information before the reference identifier is the description information for the answer video corresponding to the reference identifier. The position of the reference identifier may also be adjusted according to the actual situation. The reference identifier may be displayed by adding a new layer (such as a mask) to each answer video, or by using other forms. The examples provided are not exhaustive.

For example, as shown in FIG. 2, the reference identifier may be provided in the form of a superscript after the description information for each answer video.

In some embodiments, receiving a trigger operation of the user on a reference identifier displayed in the answer; and the answer video corresponding to the reference identifier is played.

The trigger operation may take various forms, such as tapping, selecting, etc., which is not limited in the present disclosure. The answer video corresponding to the reference identifier may be played on a video playback page that is different from the search result page, or may be played directly on the search result page, or may be played through a floating window. The playback form is not limited to the examples provided.

The search result page may also be referred to as a question and answer result page, which displays the answer and the plurality of answer videos based on the question of the user. Of course, it is also possible to display only one answer video. In some embodiments, the search result page supports overall swiping display. For example, a swiping operation of the user in a preset direction such as left-right swiping or up-down swiping may be received to display more content. When the search result page is swiped to a preset boundary, prompt information may be displayed. The search result page may also support overall zooming in and out. The user may perform a preset operation to zoom in or zoom out on the search result page.

In some embodiments, the search result page includes a fixed display area, and a search card area that supports swiping display. The answer and the plurality of answer videos are displayed in the search card area. That is, the answer and the plurality of answer videos support overall swiping display. Of course, an area for displaying the answer may also be located in the fixed display area, and an area for displaying the plurality of answer videos may also be located in the fixed display area. These aspects will not be reiterated herein.

For example, the fixed display area includes at least one of an input area or an option area. As shown in FIG. 2, the topmost part of the search result page is the input area, which may include at least one of a search control or a voice control. For example, in response to the user tapping the input area, a keyboard area is popped up. Information input by the user is received, the trigger operation of the user on the search control is received, and the search card area is displayed.

As shown in FIG. 2, the fixed display area further includes an option area, which is provided below the input area. The option area includes a plurality of option controls that are used to trigger different search scenarios or search ranges. The trigger operation of the user on any option control is received, and search results related to the information input by the user are obtained based on the search scenario or a search range corresponding to the triggered option control, and the search results are displayed.

For example, a first option control is used to trigger a video question and answer scenario. Trigger of the user on the first option control is received, the question input by the user is received, and the answer and the plurality of answer videos are displayed. For example, a second option control is used to trigger a user search scenario. Trigger of the user on the second option control is received, the information input by the user is received, and information of a plurality of related users are displayed. For example, a third option control is used to trigger a video search scenario. Trigger of the user on the third option control is received, the information input by the user is received, and a plurality of related videos are displayed. For example, a fourth option control is used to trigger an audio search scenario. Trigger of the user on the fourth option control is received, the information input by the user is received, and a plurality of related audios are displayed. For example, a fifth option control is used to trigger a shopping search scenario. Trigger of the user on the fifth option control is received, the information input by the user is received, and a plurality of related audios are displayed. For example, a sixth option control is used to trigger a live streaming search scenario. Trigger of the user on the sixth option control is received, the information input by the user is received, and a plurality of related live streams are displayed.

The order of triggering the option control and receiving the information input by the user may be adjusted and is not limited to the examples provided above. The setup of the option controls and the search scenario may be customized according to actual needs and is not limited to the examples provided above. Different search scenarios may be searched using different databases and different neural networks (or machine learning models). The option area may also be provided in the search card area, or as a separate area, supporting swiping display. For example, the option area supports left-right swiping display.

In some embodiments, the search card area includes a first area and a second area, where the answer is displayed in the first area, and the plurality of answer videos are displayed in the second area. As shown in FIG. 2, the first area may be located above the second area, which is more in line with the reading habits of the user and enhances the display effect.

In some embodiments, the plurality of answer videos support swiping display in the second area. A swiping operation of the user is received, and the answer videos in the second area are displayed. This allows more answer videos to be displayed in a limited page area, providing the user with richer content.

Each answer video is displayed in a preset size. When a total display range of the plurality of answer videos exceeds a display range of the second area, some of the plurality of answer videos may be fully displayed, and the remaining of answer videos may be partially displayed or not displayed. The swiping operation of the user may be received, and the remaining of answer videos that are within the display range of the second area are displayed.

As shown in FIG. 2, three answer videos exist in the second area, where the first two answer videos are fully displayed, and the third video is partially displayed. By the user performing a left-swiping operation, the third answer video can be displayed.

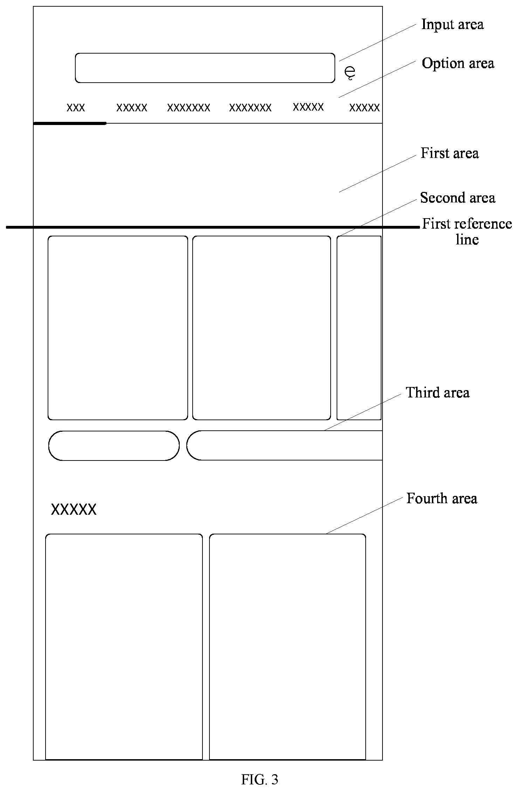

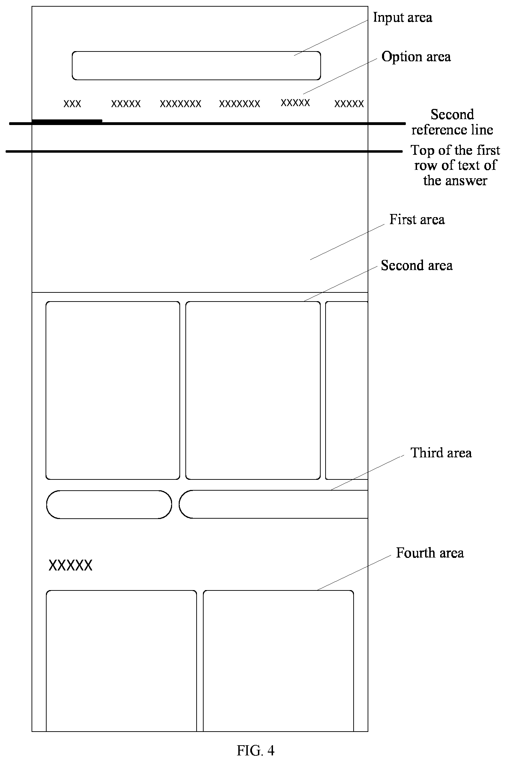

In some embodiments, a display range of the answer is adaptively adjusted based on a length of the answer. As shown in FIG. 3 and FIG. 4, when the answer is shorter, the display range of the answer is smaller, allowing more remaining information to be displayed on the page. When the answer is longer, the display range of the answer is larger, occupying a greater area on the page.

Preview information of the plurality of answer videos may be displayed, and the plurality of answer videos may be played automatically. Alternatively, preview information of some videos may be displayed, and some other videos may be played automatically. When the display range of the answer is adaptively adjusted based on the length of the answer, the position of the answer videos in the search result page is not fixed. Additionally, when the search card area supports swiping display, this also results in the position of the answer video in the search result page being not fixed. Therefore, the automatic playback of the answer videos or the display of the preview information of the answer videos may be adjusted according to the display situation.

In some embodiments, in response to the display range of the answer being within a first preset range, some or all of the plurality of answer videos are automatically played. in response to a display position of the answer is outside the first preset range, preview information of the plurality of answer videos is displayed. For example, when the display range of the answer is within the first preset range, the answer videos within the display range of the second area are automatically played. For example, as shown in FIG. 2, for the three answer videos in the second area, the first two answer videos are automatically played. Alternatively, when the display range of the answer is within the first preset range, only the first answer video is automatically played.

In some embodiments, in response to a display position at the bottom of a last row of the answer being located above a first reference line, some or all of the plurality of answer videos are automatically played.

The first reference line may be set fixedly. For example, the first reference line may be used to define the display range of the answer. For example, as shown in FIG. 3, a title may be displayed above the answer to prompt that the text is the answer. The first reference line may be set as a reference line at a preset distance from the bottom of the title.

If the display position at the bottom of the last row of the answer (for example, a horizontal line at the bottom of the last row of text) is located above the first reference line, this indicates that the current display range of the answer is smaller. In this case, the answer videos are fully displayed on the search result page and is located relatively centrally or at the top of the search result page. In this case, the answer videos are within the user's line of sight. Automatically playing some or all of the answer videos can enhance the display effect, attract the user to view the answer videos, and eliminate the need for page jump, making it more convenient for the user to view the answer videos.

In some embodiments, in response to the display position at the bottom of the last row of the answer being located below the first reference line, and a display position at the top of the first row of the answer (for example, a horizontal line at the top of the first row of text) being located above a second reference line, some or all of the plurality of answer videos are automatically played. The second reference line is located above the first reference line.

The second reference line may be fixed and may be a top position of the search card area. For example, as shown in FIG. 4, the second reference line may be a bottom position of the option area. If the display position at the top of the first row of the answer is located above the second reference line, this can indicate that the search card area has been swiped up. In this case, the answer videos are fully displayed on the search result page and are positioned relatively centrally or at the top of the search result page. In this case, the answer videos are within the user's line of sight. Automatically playing some or all of the answer videos can enhance the display effect, attract the user to view the answer videos, and eliminate the need for page jump, making it more convenient for the user to view the answer videos.

The answer videos that are fully displayed may be automatically played, or a preset number of answer videos may be automatically played in the order of display, or all the answer videos may be automatically played. The specific selection of which answer videos to be automatically played may be set and is not limited to the examples provided.

In some embodiments, a trigger operation of the user on any of the plurality of answer videos is received; and the answer video is played. The answer video may be played on a video playback page that is different from the search result page, or may be played directly on the search result page, or may be played through a floating window. The examples provided are not exhaustive.

In some embodiments, the display range of the first area is adaptively adjusted based on the length of the answer within a second preset range. The display range of the first area is the display range of the answer, and the second preset range is used to define a maximum display range of the answer.

In some embodiments, in response to a length of the answer exceeding the second preset range, content of the answer that exceeds the second preset range is hidden, and an expand control is displayed; and a trigger operation of the user on the expand control is received, and the answer is fully displayed.

In some embodiments, in response to the length of the answer exceeding the second preset range and the answer is fully displayed, a hide control is displayed; and a trigger operation of the user on the hide control is received, and the content of the answer that exceeds the second preset range is hidden.

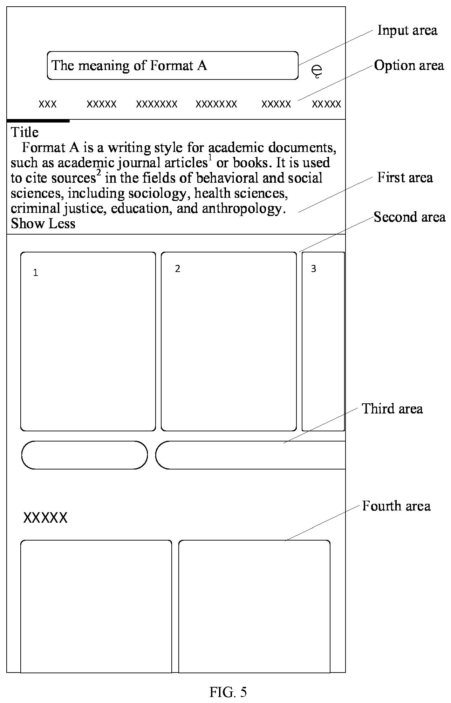

As shown in FIG. 2, the expand control (View More) may be displayed at an end position of the displayed answer. The user may trigger the expand control by tapping, etc., and the display effect after expanding is shown in FIG. 5. As shown in FIG. 5, similarly, the hide control may also be displayed at an end position of the displayed answer. The user may trigger the hide control (Show Less) to hide some of the content, and the display effect after hiding is shown in FIG. 2.

When the answer is longer, hiding some of content of the answer allows more answer videos to be displayed, so that the search result page displays richer content, thereby enhancing the display effect and enhancing the reading experience of the user. By expanding the hidden content, the user can conveniently view the complete answer.

In some embodiments, one or more candidate questions are displayed on the search result page based on the question and the plurality of answer videos.

The one or more candidate questions are related to the question and some or all of the plurality of answer videos. For example, the candidate question may be "Can more answer videos be displayed?". The one or more candidate questions may be generated by machine understanding of the question and the plurality of answer videos. As shown in FIG. 2, the one or more candidate questions may be displayed in a third area, and the third area may be located below the second area. This is in line with the reading order of the user and enhances the display effect. The third area may be located in the search card area.

In some embodiments, a selection operation of the user on any of the one or more candidate questions is received, and the page jumps to a conversation page; and an answer to the selected candidate question is displayed on the conversation page.

The conversation page can receive a question input by the user and display a corresponding answer. For example, the conversation page is a human-machine interaction page. The conversation page may display the selected candidate question and the corresponding answer, and may alternatively display other candidate questions.

By directly displaying the one or more candidate questions, the user can conveniently ask follow-up questions without the need to input questions themselves, thereby enhancing convenience and the display effect.

In some embodiments, an entry control for continuing to ask questions is displayed on the search result page; and a trigger operation of the user on the entry control is received, and the page jumps to the conversation page. In some embodiments, at least one of the answer or a candidate question is displayed on the conversation page.

As shown in FIG. 2, the entry control may be provided in the third area, in the same area as the one or more candidate questions. The entry control may be provided ahead of the one or more candidate questions based on the reading direction. The examples provided are not exhaustive. When entering the conversation page through the entry control, the conversation page can display the answer on the search result page, or may display the one or more candidate questions. A selection operation of the user on any of the one or more candidate questions is received, and an answer to the selected candidate question is displayed on the conversation page.

In some embodiments, a plurality of recommended videos related to the question are displayed on the search result page. A search strategy for the plurality of recommended videos is different from that for the plurality of answer videos. The search strategy may include at least one of a search algorithm or a selection metric.

A neural network model (or a machine learning model) used to generate the recommended videos may be different from the neural network model (or the machine learning model) used to generate the answer videos. That is, the search algorithms may be different. The selection metrics for selecting the recommended videos and the answer videos may be different. For example, a comprehensive metric may be determined based on a plurality of metrics such as a relevance to the question, a search popularity (number or frequency), a number of user comments, a number of user likes (degree of preference), and a number of views of each video. The videos may then be ranked based on the comprehensive metric, and videos ranking within a first preset position are selected as the answer videos related to the question; and the videos may be ranked based on the number of user likes, and videos ranking within the second preset position are selected as recommended videos related to the question.

As shown in FIG. 2, the plurality of recommended videos may be displayed in the fourth area, and the fourth area may be provided in the search card area.

In some embodiments, a trigger operation of the user on any recommended vide of the plurality of recommended videos is received; and the any recommended video is played. The corresponding recommended video may be played on a video playback page that is different from the search result page, or may be played directly on the search result page, or may be played through a floating window. The examples provided are not exhaustive.

By displaying the recommended videos, the content on the search result page can be enriched, thereby enhancing the display effect. Moreover, the diverse needs of the user can be met, thereby enhancing the user experience.

In some embodiments, a reference metric is displayed on each answer video and/or each recommended video. The reference metric may include one or more of the following metrics: a relevance to the question, a search popularity (number or frequency), a number of user comments, a number of user likes (degree of preference), or a number of views. For example, the reference metric may be displayed by adding a new layer to the video. The examples provided are not exhaustive.

In some embodiments, a first operation of the user on any answer video of the plurality of answer videos is received; and the answer video corresponding to the first operation is switched from a first display state to a second display state.

In some embodiments, a second operation of the user on a control on the search result page is received; and the control corresponding to the second operation is switched from a third display state to a fourth display state.

The first operation and the second operation may be the same or different operations. For example, both the first operation and the second operation are presses, or the first operation is a press and the second operation is a selection. The examples provided are not exhaustive.

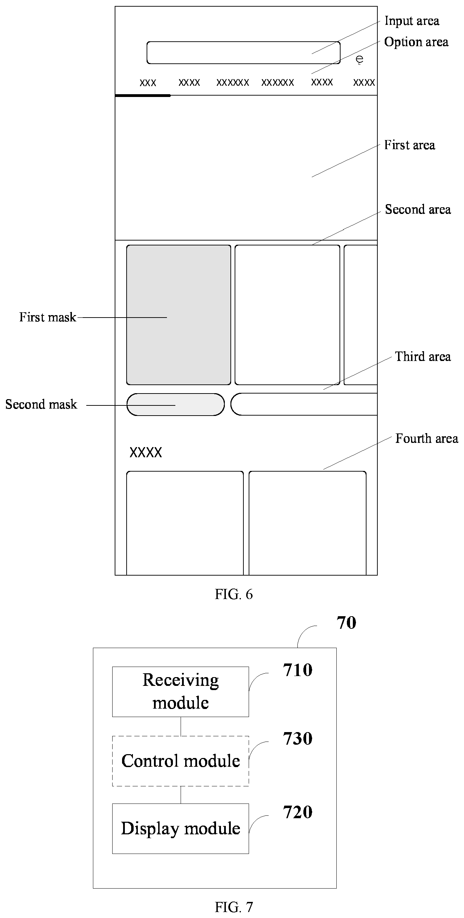

As shown in FIG. 6, after the first operation of the user is received, a first mask may be provided to switch the answer video corresponding to the first operation from the first display state to the second display state. For example, a display color, transparency, and other states of the answer video may be changed through the first mask. After the second operation of the user is received, a second mask may be provided to switch the control corresponding to the second operation from the third display state to the fourth display state. A display color, transparency, and other states of the control is changed through the second mask. The examples provided are not exhaustive. The colors, transparency, etc., of the first mask and the second mask may be different.

The switching of the display states of the answer video also applies to the recommended videos. A first operation of the user on any of the plurality of recommended videos is received; and the recommended video corresponding to the first operation is switched from the first display state to the second display state.

By switching the display state of the videos or the control, the user can intuitively feel the operation on the videos or the control, thereby enhancing the display effect and the user experience.

In the search processing method of the above-mentioned embodiment, the question input by the user is received, and the answer to the question and the plurality of answer videos related to the question may be displayed on the search result page based on the question. Moreover, the answer is a statement that is generated by machine understanding of the plurality of answer videos and that is described in natural language. The answer includes description information for each answer video that is generated by machine understanding of each of the plurality of answer videos. The method of the above-mentioned embodiment changes the traditional video search manner, and can automatically answer the question input by the user and display the related answer videos. The answer is generated based on machine understanding of the videos, and the pieces of description information for the plurality of answer videos in the answer are associated and integrated to be expressed in natural language. This allows the user to intuitively see the answer and the answer videos after inputting the question, clearly understand the relationship between the answer videos and the answer, and grasp the content described in the answer videos, making it easier for them to further explore the detailed content of the answer videos. The method of the above-mentioned embodiment improves the accuracy and effectiveness of the search, enhances the search effect and the display effect, and enhances the user experience.

The above-mentioned embodiment mainly describes the solution about how to respond to and display the question input by the user.

In some embodiments, the information input by the user is received; in response to the input information being not a question, a second neural network (or a second machine learning model) is used to perform machine understanding on a plurality of pieces of multimedia content in a second database based on the input information, to obtain a plurality of pieces of target multimedia content related to the input information from the plurality of pieces of multimedia content; and the plurality of pieces of target multimedia content is displayed on the search result page.

The second database may be configured to store multimedia content for searching. The multimedia content includes, for example: at least one of text, speech, image, or video. When the multimedia content is a video, the relevant display method for the answer videos or the recommended videos described in the above-mentioned embodiment is also applicable.

In some embodiments, a trigger operation of the user on any target multimedia content is received, and detailed information of the corresponding multimedia content is further displayed. For example, the trigger operation may be playing a video or an audio, or zooming in text or an image.

Depending on the different types of information input by the user, different searches are conducted, and different content is displayed. This enhances the search effect and the display effect, meets the diverse needs of the user, and enhances the user experience.

The orientations such as up, down, left, right, etc. in the present disclosure reference a general reading direction of a page. In the present disclosure, trigger operations for different videos and controls may be different types of operations. For example, some trigger operations are taps, and others are selections, which is not limited herein.

The present disclosure further provides a search processing apparatus, which is described below with reference to FIG. 7.

FIG. 7 is a structural diagram of a search processing apparatus according to some embodiments of the present disclosure. As shown in FIG. 7, the apparatus 70 in this embodiment includes: a receiving module 710 and a display module 720.

The receiving module 710 is configured to receive a question input by a user.

The display module 720 is configured to display, on a search result page, an answer to the question and a plurality of answer videos related to the question based on the question, where the answer is a statement that is generated by machine understanding of the plurality of answer videos and that is described in natural language, and the answer includes description information for each answer video that is generated by machine understanding of each of the plurality of answer videos.

In some embodiments, the display module 720 is configured to display a reference identifier for each answer video at a position corresponding to the description information for each answer video in the answer; and the reference identifier for each answer video is displayed on each answer video.

In some embodiments, the receiving module 710 is further configured to receive a trigger operation of the user on the reference identifier displayed in the answer; and the display module 720 is further configured to play the answer video corresponding to the reference identifier.

In some embodiments, the display module 720 is further configured to display one or more candidate questions on the search result page based on the question and the plurality of answer videos.

In some embodiments, the receiving module 710 is further configured to receive a selection operation of the user on any of the one or more candidate questions.

In some embodiments, the display module 720 is further configured to jump to a conversation page, and display an answer to the selected candidate question on the conversation page.

In some embodiments, the display module 720 is further configured to display an entry control for continuing to ask questions on the search result page; and the receiving module 710 is further configured to receive a trigger operation of the user on the entry control, and the display module 720 is further configured to jump to a conversation page and display the conversation page.

In some embodiments, the display module 720 is further configured to display at least one of the answer or a candidate question on the conversation page.

In some embodiments, the display module 720 is configured to automatically play some or all of the plurality of answer videos in response to a display range of the answer being within a first preset range.

In some embodiments, the display module 720 is configured to display preview information of the plurality of answer videos in response to the display position of the answer being outside the first preset range.

In some embodiments, the display module 720 is configured to automatically play some or all of the plurality of answer videos in response to the display position at the bottom of a last row of the answer being located above a first reference line.

In some embodiments, the display module 720 is configured to automatically play some or all of the plurality of answer videos in response to the display position at the bottom of the last row of the answer being located below the first reference line, and a display position at the top of a first row of the answer being located above a second reference line, where the second reference line is located above the first reference line.

In some embodiments, the search result page includes a fixed display area, and a search card area that supports swiping display. The display module 720 is configured to display the answer and the plurality of answer videos in the search card area.

In some embodiments, the search card area includes a first area and a second area. The display module 720 is configured to display the answer in the first area, where a display range of the first area is adaptively adjusted based on a length of the answer within a second preset range; and the plurality of answer videos are displayed in the second area, where the plurality of answer videos support swiping display in the second area.

In some embodiments, the display module 720 is configured to hide content of the answer that exceeds the second preset range, and display an expand control in response to a length of the answer exceeds the second preset range; and the receiving module 710 is further configured to receive a trigger operation of the user on the expand control, and the display module 720 is configured to fully display the answer.

In some embodiments, the display module 720 is configured to display a hide control in response to the length of the answer exceeding the second preset range and the answer being fully displayed; and the receiving module 710 is further configured to receive a trigger operation of the user on the hide control, and the display module 720 is configured to hide the content of the answer that exceeds the second preset range.

In some embodiments, the receiving module 710 is further configured to receive a first operation of the user on any of the plurality of answer videos; and the display module 720 is further configured to switch an answer video corresponding to the first operation from a first display state to a second display state.

In some embodiments, the receiving module 710 is further configured to receive a second operation of the user on a control on the search result page; and the display module 720 is further configured to switch the control corresponding to the second operation from a third display state to a fourth display state.

In some embodiments, the display module 720 is further configured to display a plurality of recommended videos related to the question on the search result page, where a search strategy for the plurality of recommended videos is different from that for the plurality of answer videos.

In some embodiments, the receiving module 710 is further configured to receive a trigger operation of the user on any recommended video of the plurality of recommended videos; and the display module 720 is further configured to play the any recommended video.

In some embodiments, the receiving module 710 is further configured to receive a trigger operation of the user on any answer video of the plurality of answer videos; and the display module 720 is further configured to play the any answer video.

In some embodiments, the search processing apparatus further includes: a control module 730 configured to use a first neural network model to perform machine understanding on a plurality of videos in a first database based on the question, to obtain the plurality of answer videos related to the question from the plurality of videos, and generate the description information for each answer video; and generate the answer based on the description information for each answer video.

In some embodiments, the receiving module 710 is further configured to receive information input by the user; the control module 730 is further configured to use a second neural network to perform machine understanding on a plurality of pieces of multimedia content in a second database based on the input information, and obtain a plurality of pieces of target multimedia content related to the input information from the plurality of pieces of multimedia content; and the display module 720 is further configured to display the plurality of pieces of target multimedia content on the search result page.

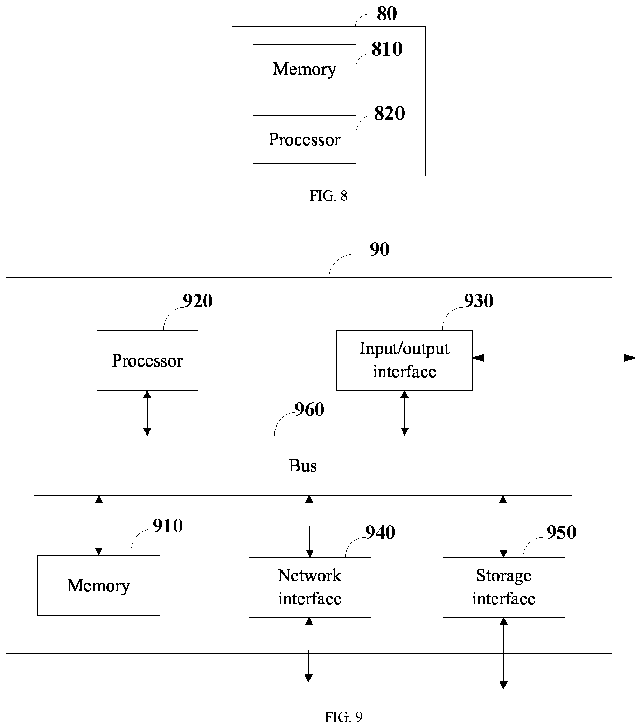

The search processing apparatus in the embodiments of the present disclosure may be implemented by various computing devices or computer systems, and is described below with reference to FIG. 8 and FIG. 9.

FIG. 8 is a structural diagram of a search processing apparatus according to some embodiments of the present disclosure. As shown in FIG. 8, the apparatus 80 in this embodiment includes: a memory 810 and a processor 820 coupled to the memory 810, where the processor 820 is configured to perform the search processing method in any of some embodiments of the present disclosure based on instructions stored in the memory 810.

The memory 810 may include, for example, a system memory, a fixed non-volatile storage medium, etc. The system memory has, for example, an operating system, an application, a boot loader, a database, and other programs stored therein.

FIG. 9 is a structural diagram of a search processing apparatus according to some other embodiments of the present disclosure. As shown in FIG. 9, the apparatus 90 in this embodiment includes: a memory 910 and a processor 920, which are similar to the memory 810 and the processor 820, respectively. The apparatus may further include an input/output interface 930, a network interface 940, a storage interface 950, etc. These interfaces 930, 940, and 950, and the memory 910 and the processor 920 may be connected to each other, for example, via a bus 960. The input/output interface 930 provides a connection interface for an input/output device such as a display, a mouse, a keyboard, and a touch screen. The network interface 940 provides a connection interface for various networked devices, which may be, for example, connected to database servers or cloud storage servers. The storage interface 950 provides a connection interface for an external storage device such as an SD card and a USB flash drive.

The present disclosure further provides a computer-readable storage medium. The computer-readable storage medium has a computer program stored thereon that, when executed by a processor, causes the search processing method according to any of the embodiments of the present disclosure to be implemented.

The present disclosure further provides a computer program having instructions stored thereon that, when executed by a processor, cause the search processing method according to any of the embodiments of the present disclosure to be implemented.

The present disclosure further provides a computer program product having instructions stored thereon that, when executed by a processor, cause the search processing method according to any of the embodiments of the present disclosure to be implemented.

It should be understood by those skilled in the art that the embodiments of the present disclosure can be provided as a method, a system, or a computer program product. Accordingly, the present disclosure may take a form of an entirely hardware embodiment, an entirely software embodiment, or an embodiment combining software and hardware aspects. Furthermore, the present disclosure may take the form of a computer program product that is implemented on one or more computer-usable non-transitory storage media (including, but not limited to, a disk memory, a CD-ROM, an optical memory, etc.) that include computer-usable program code.

The present disclosure is described with reference to the flowcharts and/or the block diagrams of the method, the device (system), and the computer program product according to the embodiments of the present disclosure. It should be interpreted that each procedure and/or block in the flowcharts and/or block diagrams, and a combination of procedures and/or blocks in the flowcharts and/or block diagrams may be implemented by computer program instructions. These computer program instructions may be provided to a processor of a general-purpose computer, a special-purpose computer, an embedded processor or other programmable data processing devices to create a machine, such that the instructions executed by the processor of the computer or other programmable data processing devices create means for implementing functions specified in one or more procedures in the flowcharts and/or one or more blocks in the block diagrams.

These computer program instructions may also be stored in a computer-readable memory that may direct the computer or other programmable data processing devices to operate in a specific manner, such that the instructions stored in the computer-readable memory create an article of manufacture including instruction means, and the instruction means implements the functions specified in one or more procedures in the flowcharts and/or one or more blocks in the block diagrams.

These computer program instructions may also be loaded onto the computer or other programmable data processing devices, such that a series of operation steps are executed on the computer or other programmable devices to perform computer-implemented processing, and thus the instructions executed on the computer or other programmable devices provide steps for implementing the functions specified in one or more procedures in the flowcharts and/or one or more blocks in the block diagrams.

The above description is merely illustrative of the preferred embodiments of the present disclosure and is not intended to limit the present disclosure. Any modifications, equivalent substitutions, improvements, etc. made within the spirit and principles of the present disclosure shall fall within the scope of protection of the present disclosure.

## Claims

1. A search processing method, comprising:
receiving a question input by a user; and
displaying, on a search result page, an answer to the question and a plurality of answer videos related to the question based on the question, wherein the answer is a statement that is generated by machine understanding of the plurality of answer videos and that is described in natural language, and the answer comprises description information for each answer video that is generated by machine understanding of each of the plurality of answer videos.

2. The search processing method according to claim 1, wherein the displaying, on the search result page, the answer to the question and the plurality of answer videos related to the question comprises:
displaying a reference identifier for each answer video at a position corresponding to the description information for each answer video in the answer; and
displaying the reference identifier for each answer video on each answer video.

3. The search processing method according to claim 2, further comprising:
receiving a trigger operation of the user on the reference identifier displayed in the answer; and
playing the answer video corresponding to the reference identifier.

4. The search processing method according to any one of claims 1 to 3, further comprising:
displaying one or more candidate questions on the search result page based on the question and the plurality of answer videos.

5. The search processing method according to claim 4, further comprising:
receiving a selection operation of the user on any of the one or more candidate questions, and jumping to a conversation page; and
displaying an answer to the selected candidate question on the conversation page.

6. The search processing method according to any one of claims 1 to 5, further comprising:
displaying an entry control for continuing to ask questions on the search result page; and
receiving a trigger operation of the user on the entry control, and jumping to a conversation page.

7. The search processing method according to claim 6, further comprising:
displaying at least one of the answer or a candidate question on the conversation page.

8. The search processing method according to any one of claims 1 to 7, wherein the displaying, on the search result page, the answer to the question and the plurality of answer videos related to the question comprises:
playing some or all of the plurality of answer videos automatically in response to a display range of the answer being within a first preset range.

9. The search processing method according to claim 8, wherein the displaying, on the search result page, the answer to the question and the plurality of answer videos related to the question further comprises:
displaying preview information of the plurality of answer videos in response to a display position of the answer being outside the first preset range.

10. The search processing method according to claim 8 or 9, wherein the playing some or all of the plurality of answer videos automatically in response to the display range of the answer being within the first preset range comprises:
playing some or all of the plurality of answer videos automatically in response to a display position at the bottom of a last row of the answer being located above a first reference line.

11. The search processing method according to claim 10, wherein the playing some or all of the plurality of answer videos automatically in response to the display range of the answer being within the first preset range further comprises:
playing some or all of the plurality of answer videos automatically in response to the display position at the bottom of the last row of the answer being located below the first reference line, and a display position at the top of a first row of the answer being located above a second reference line, wherein the second reference line is located above the first reference line.

12. The search processing method according to any one of claims 1 to 11, wherein the search result page comprises a fixed display area, and a search card area that supports swiping display, and the displaying, on the search result page, the answer to the question and the plurality of answer videos related to the question further comprises:
displaying the answer and the plurality of answer videos in the search card area.

13. The search processing method according to claim 12, wherein the search card area comprises a first area and a second area, and the displaying the answer and the plurality of answer videos in the search card area comprises:
displaying the answer in the first area, wherein a display range of the first area is adaptively adjusted based on a length of the answer within a second preset range; and
displaying the plurality of answer videos in the second area, wherein the plurality of answer videos support swiping display in the second area.

14. The search processing method according to claim 13, wherein the displaying the answer in the first area comprises:
hiding content of the answer that exceeds the second preset range, and displaying an expand control, in response to a length of the answer exceeding the second preset range; and
receiving a trigger operation of the user on the expand control, and displaying the answer fully.

15. The search processing method according to claim 14, wherein the displaying the answer in the first area further comprises:
displaying a hide control in response to the length of the answer exceeding the second preset range and the answer being fully displayed; and
receiving a trigger operation of the user on the hide control, and hiding content of the answer that exceeds the second preset range.

16. The search processing method according to any one of claims 1 to 15, further comprising:
receiving a first operation of the user on any of the plurality of answer videos; and switching an answer video corresponding to the first operation from a first display state to a second display state.

17. The search processing method according to any one of claims 1 to 16, further comprising:
receiving a second operation of the user on a control on the search result page; and
switching the control corresponding to the second operation from a third display state to a fourth display state.

18. The search processing method according to any one of claims 1 to 17, further comprising:
displaying a plurality of recommended videos related to the question on the search result page, wherein a search strategy for the plurality of recommended videos is different from a search strategy for the plurality of answer videos.

19. The search processing method according to claim 18, further comprising:
receiving a trigger operation of the user on any recommended video of the plurality of recommended videos; and
playing the any recommended video.

20. The search processing method according to any one of claims 1 to 19, further comprising:
receiving a trigger operation of the user on any answer video of the plurality of answer videos; and
playing the any answer video.

21. The search processing method according to any one of claims 1 to 20, wherein the displaying, on the search result page, the answer to the question and the plurality of answer videos related to the question based on the question comprises:
performing machine understanding on a plurality of videos in a first database based on the question by using a first neural network model, to obtain the plurality of answer videos related to the question from the plurality of videos, and generate the description information for each answer video; and
generating the answer based on the description information for each answer video.

22. The search processing method according to claim 21, further comprising:
receiving information input by the user;
performing machine understanding on a plurality of pieces of multimedia content in a second database based on the input information by using a second neural network model, to obtain a plurality of pieces of target multimedia content related to the input information from the plurality of pieces of multimedia content, in response to the input information being not a question; and
displaying the plurality of pieces of target multimedia content on the search result page.

23. A search processing apparatus, comprising:
a receiving module configured to receive a question input by a user; and
a display module configured to display, on a search result page, an answer to the question and a plurality of answer videos related to the question based on the question, wherein the answer is a statement that is generated by machine understanding of the plurality of answer videos and that is described in natural language, and the answer comprises description information for each answer video that is generated by machine understanding of each of the plurality of answer videos.

24. A search processing apparatus, comprising:
a processor; and
a memory coupled to the processor and configured to store instructions that, when executed by the processor, cause the processor to perform the search processing method according to any one of claims 1 to 22.

25. A computer-readable storage medium having a computer program stored thereon, wherein the program, when executed by a processor, causes the processor to implement the search processing method according to any one of claims 1 to 22.

26. A computer program product, comprising instructions that, when executed by a processor, cause the processor to implement the search processing method according to any one of claims 1 to 22.

27. A computer program, comprising instructions that, when executed by a processor, cause the processor to implement the search processing method according to any one of claims 1 to 22.
